# EUROPEAN PATENT SPECIFICATION

(11) **EP 0 554 609 B1**
(45) Date of publication and mention of the grant of the patent: **28.08.1996**
(21) Application number: 92308756.3
(22) Date of filing: 25.09.1992
(51) Int. Cl.: G02C 5/22, G02C 1/08

(54) **Screw stopping mechanism for spectacles**
Schraubsicherungsmechanismus für Brille
Mécanisme d'arrêt de vis pour lunettes

(30) Priority: 04.02.1992 JP 54375/92
(43) Date of publication of application: 11.08.1993
(73) Proprietor: FUKUOKA SEIMITU KABUSHIKI KAISHA, Sabae-shi, Fukui-ken (JP)
(72) Inventor: Fukuoka, Mikihito, c/o Fukuoka Seismitu K.K., Sabae-shi, Fukui-ken (JP)
(74) Representative: Carpenter, David

(56) References cited:
- EP-A- 0 051 022
- EP-A- 0 249 571
- EP-A- 0 393 244
- DE-B- 1 224 058
- US-A- 2 774 098

## Description

This invention relates to a screw stopping mechanism for use in a pair of spectacles.

In most conventional pairs of spectacles, two parts of the pair of spectacles are interconnected using a male threaded screw which engages with a female thread in a bore formed in one part of the pair of spectacles, the screw extending through a clearance bore provided in the other part of the pair of spectacles.

The screws used in such applications are generally very small in size, and the frictional force between the screw and the threaded bore of the pair of spectacles is often not enough to prevent rotation of the screw due to the pair of spectacles being vibrated slightly. It is therefore common for such screws to become loose.

It is an object of the invention to provide a screw stopping mechanism in which the loosening of the screw due to slight vibration of the pair of spectacles is reduced.

In accordance with the present invention there is provided a screw stopping mechanism for use in connecting first and second parts of a pair of spectacles comprising a cone projection axially split as to form a plurality of arc segments and being provided on a first part of said pair of spectacles, an internally screw threaded aperture extending through said first part and said split cone projection, the screw threaded aperture being of decreasing diameter, and a screw arranged to be inserted into said aperture in the direction of decreasing diameter, said screw having a diameter greater than the minimum diameter of the aperture.

The invention will further be described, by way of example, with reference to the accompanying drawings, in which:
Figure 1 is an exploded view of a screw stopping mechanism of a first embodiment;
Figure 2 is a plan view of the screw stopping mechanism of Figure 1;
Figure 3 is a front view of the screw stopping mechanism of Figure 1;
Figure 4 is a partly enlarged sectional view of a hinge piece using the screw stopping mechanism of Figure 1;
Figure 5 is a partly enlarged sectional view of the hinge piece of Figure 4;
Figure 6 is an exploded view of a screw stopping mechanism of a second embodiment;
Figure 7 is a front view of the screw stopping mechanism of Figure 6;
Figure 8 is a plan view of the screw stopping mechanism of Figure 6;
Figure 9 is a sectional view of part of the screw stopping mechanism of Figure 6;
Figure 10 is a sectional view of the screw stopping mechanism of Figure 6; and
Figure 11 is a perspective view of a pair of spectacles incorporating the screw stopping mechanisms of the first and second embodiments.

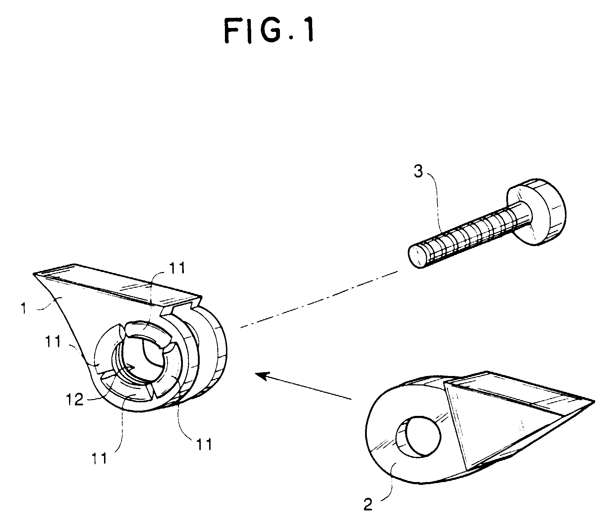

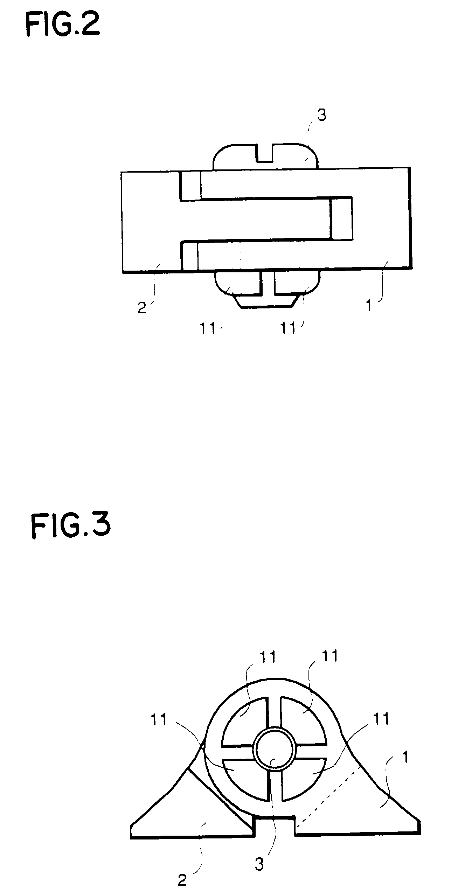

The screw stopping mechanism shown in Figures 1 to 5 comprises a first part 1 forming part of, or arranged to be attached to, the frame of pair of spectacles, and a second part 2 forming part of, or arranged to be attached to, an arm of the pair of spectacles, the first and second parts 1, 2 forming a hinged connection between the frame and the arm. Where the first and second parts 1, 2 are arranged to be attached to their respective parts of the pair of spectacles, it will be understood that the first and second parts 1, 2 may be attached by soldering or using any other suitable technique. The first part 1 includes a pair of parallel flanges, spaced apart from each other, each flange being provided with an aperture, the apertures being coaxial with each other. The second part 2 includes an extension arranged to fit in the gap defined by the flanges of the first part 1. The extension is also provided with an aperture which is arranged to be coaxial with the apertures of the flanges when the extension is inserted into the gap.

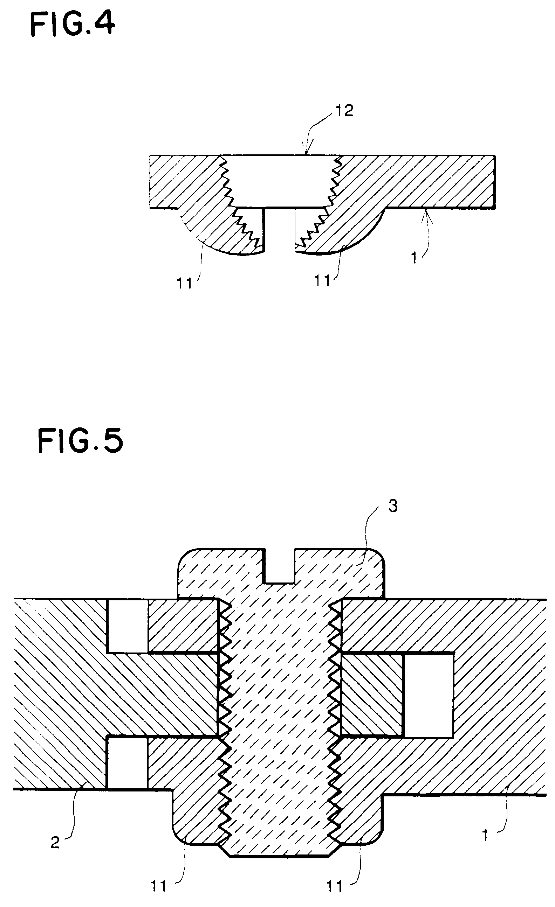

A split cone projection is provided on a face of a first flange of the first part facing away from the other flange, the aperture 12 extending through said projection. The projection includes four splits, and hence, has the appearance of four arcs 11 surrounding the aperture 12. The inner surface of the aperture 12 is provided with a female screw thread, the thread extending onto the inner surface of the projection. As clearly shown in Figure 4, the diameter of the aperture 12 decreases in the direction away from the other flange so that the portion of the aperture of minimum diameter is at the tip of the projection. Such a screw thread may be provided by commencing tapping from the side of the first flange closest to the other flange. It will be understood that when the tap reaches the projection, the four arcs 11 defining the projection will expand outwardly, so that on removal of the tap, and the return of the arcs 11 of the projection to their original positions, the internal thread will be of decreasing diameter.

The apertures formed in the other flange and in the extension to the second part 2 are of substantially equal diameter, and are larger in diameter than the threaded aperture 12 formed in the first flange. These apertures act as clearance bores, and so must be of slightly greater diameter than a screw 3 extending through them, in use.

In use, the extension of the second part 2 is inserted into the gap defined by the flanges of the first part 1 such that the apertures align, and a threaded screw 3 of constant diameter is inserted into the aligned apertures from said other flange. The screw 3 is then rotated, the thread provided on the screw 3 engaging with the female thread provided on the inner surface of the aperture 12. The screw 3 is rotated until the tip of the screw 3 reaches the split cone projection whereupon further rotation of the screw 3 results in the arcs of the projection being forced outwardly so as to increase the inner diameter of the aperture 12. It will be understood that the provision of the aperture 12 of decreasing diameter results in the application of pressure on the screw 3, and hence reduces the likelihood of the screw 3 becoming loosened during slight vibration of the pair of spectacles.

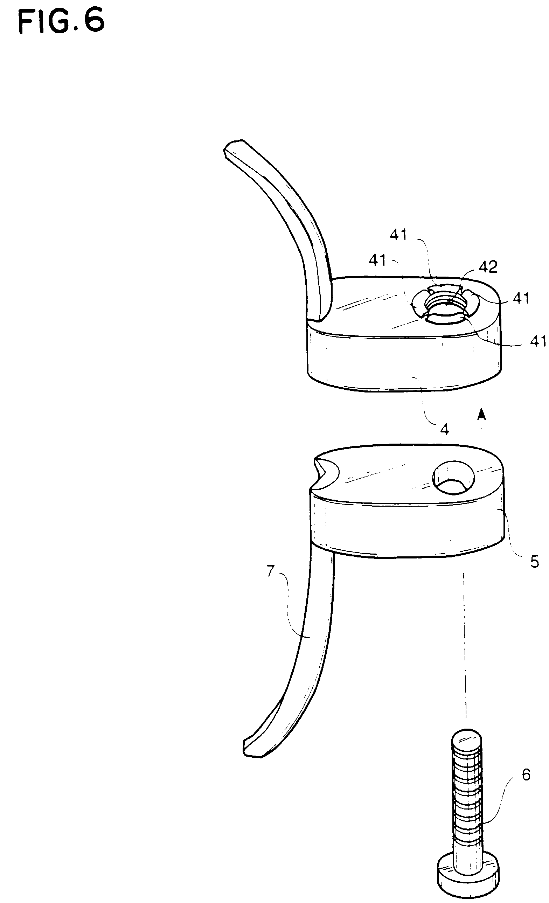

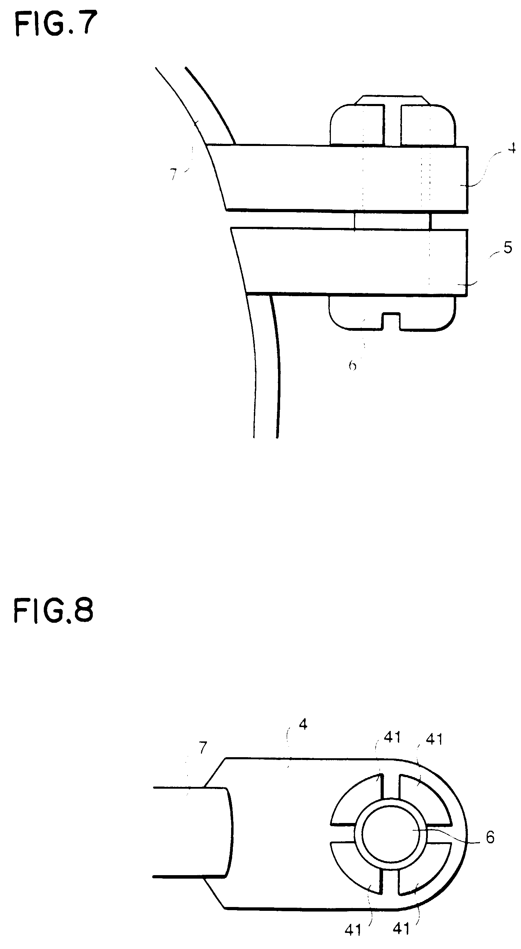

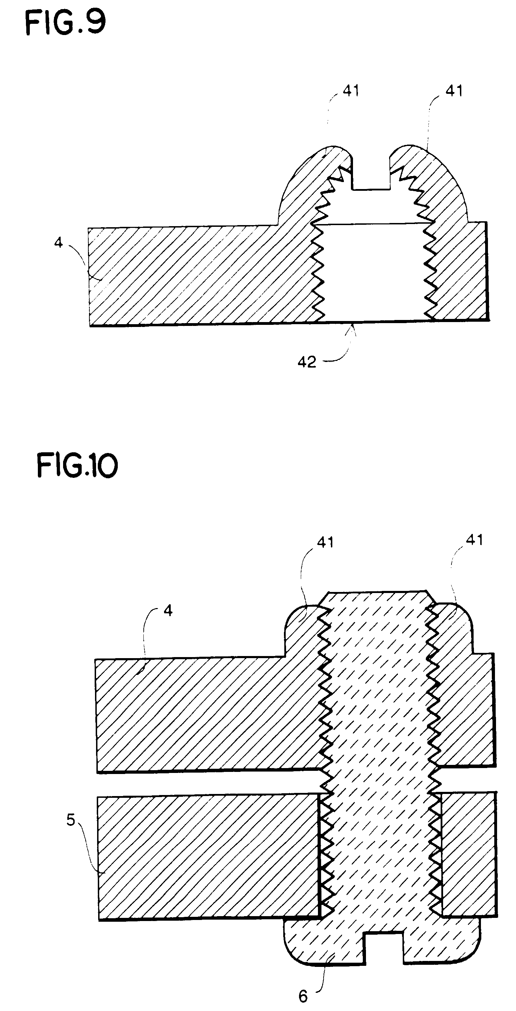

Figures 6 to 10 show a similar screw stopping mechanism to that shown in Figures 1 to 5 and described above, but in this case, the first part 4 of the screw stopping mechanism is attached to an upper part of the frame of the pair of spectacles, and the second part 5 is attached to the lower part of the frame. The first part 4 comprises a single flange provided with an aperture 41 as described above in relation to the aperture 12 provided in the first flange. The second part 5 also comprises a single flange provided with an aperture arranged to align with the aperture 41 of the first part 4.

A split cone projection of the type described above is provided on the first part 4, the aperture 41 provided in the first part 4 extending through the projection. In use, the apertures 41 provided in the first and second parts 4, 5 are aligned, a screw 6 inserted into the aligned apertures, and the screw 6 tightened until the split cone projection causes the screw 6 to be tightly gripped.

It will be understood that the first and second parts 4, 5 of the screw stopping mechanism may be attached to the frame by soldering or other means, or they could form part of an integral molding.

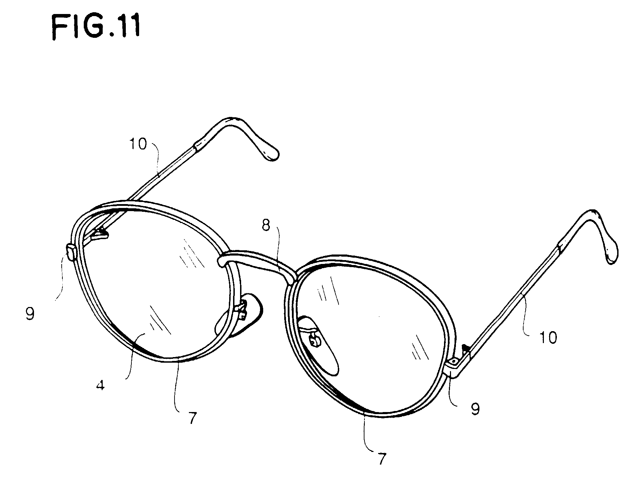

As shown in Figure 11, the split cone projection forming part of the first part of the pair of spectacles can be shaped so as to constitute part of the ornamental design of the pair of spectacles.

## Claims

1. A screw stopping mechanism for use in connecting first and second parts of a pair of spectacles comprising a cone projection axially split as to form a plurality of arc segments and being provided on the first part (1) of said pair of spectacles, an internally screw threaded aperture (12) extending through said first part (1) and said split cone projection, the screw threaded aperture (12) being of decreasing diameter, and a screw (3) arranged to be inserted into said aperture (12) in the direction of decreasing diameter, said screw (3) having a diameter greater than the minimum diameter of the aperture (12).

2. A screw stopping mechanism as claimed in Claim 1, characterized in that said split cone projection includes four arc segments.

3. A screw stopping mechanism as claimed in Claim 1 or Claim 2, characterized in that the second part (2) of said pair of spectacles includes a clearance bore through which said screw (3) extends in use.

## Patentansprüche

1. Ein Schrauben-Sicherungsmechanismus zur Anwendung bei der Verbindung von ersten und zweiten Teilen einer Brille, die folgende Elemente aufweist: einen kegelförmigen Vorsprung, der axial geschlitzt ist, um so eine Vielzahl von Bogensegmenten zu bilden, und der an einem ersten Teil (1) der Brille vorhanden ist, eine mit Innengewinde versehene Öffnung (12), die durch den ersten Teil (1) und den geschlitzten kegelförmigen Vorsprung führt, wobei die mit Innengewinde versehene Öffnung (12) einen abnehmenden Durchmesser hat, und eine Schraube (3), die so angeordnet ist, daß sie in der Richtung des abnehmenden Durchmessers in die Öffnung (12) eingeführt werden kann, wobei die Schraube (3) einen Durchmesser hat, der größer als der kleinste Durchmesser der Öffnung (12) ist.

2. Ein Schrauben-Sicherungsmechanismus nach Anspruch 1, dadurch gekennzeichnet, daß der geschlitzte kegelförmige Vorsprung vier Bogensegmente einschließt.

3. Ein Schrauben-Sicherungsmechanismus nach Anspruch 1 oder Anspruch 2, dadurch gekennzeichnet, daß der zweite Teil (2) der Brille eine lichte Bohrung einschließt, durch die bei der Anwendung die Schraube (3) führt.

## Revendications

1. Mécanisme d'arrêt à vis destiné à être utilisé pour relier les première et seconde pièces d'une paire de lunettes, comprenant une protubérance sous forme de cône fendue axialement de manière à former une pluralité de segments en forme d'arcs et étant prévue sur la première pièce (1) de ladite paire de lunettes, une ouverture (12) pourvue d'un filetage interne traversant ladite première pièce (1) et ladite protubérance sous forme de cône fendu, l'ouverture filetée (12) ayant un diamètre se réduisant, et une vis (3) prévue pour être insérée dans ladite ouverture (12) dans la direction du diamètre se réduisant, ladite vis (3) ayant un diamètre plus grand que le diamètre minimum de l'ouverture (12).

2. Mécanisme d'arrêt à vis selon la revendication 1, caractérisé en ce que ladite protubérance sous forme de cône fendu inclut quatre segments en forme d'arcs.

3. Mécanisme d'arrêt à vis selon la revendication 1 ou 2, caractérisé en ce que la seconde pièce (2) de ladite paire de lunettes comporte un alésage de dégagement traversé par ladite vis (3) pendant l'utilisation.
